# EUROPEAN PATENT APPLICATION

(11) **EP 0 977 394 A2**
(43) Date of publication of application: **02.02.2000**
(21) Application number: 99304933.7
(22) Date of filing: 23.06.1999
(51) Int. Cl.: H04J 14/02

(54) **Bidirectional ring networks implemented on a single fiber**

(30) Priority: 23.06.1998 US 102774
(71) Applicant: NORTEL NETWORKS CORPORATION, Montreal, Quebec H2Y 3Y4 (CA)
(72) Inventor: Solheim, Alan Glen, Kanata, Ontario K2M 1C4 (CA); Danagher, David J., Nepean, Ontario K2G 6B4 (CA); Frodsham, James A., Stittsville, Ontario K2S 1R2 (CA)
(74) Representative: Bewley, Ewan Stuart

(57) **Abstract**

The present invention provides a method of and system for carrying bidirectional traffic on a ring transmission system, such as a SONET, SDH or WDM ring, on a single fiber. Using the present invention, hub and mesh traffic patterns can be implemented on a single fiber ring network in configurations such as a UPSR, a BLSR and a diversely routed 1+1 protection system. This allows for network startup with a substantially lower capital outlay than is associated with traditional ring transmission system configurations. In addition, the present invention greatly improves the efficiency of ring network utilization. Specifically, the present invention provides a method of carrying bidirectional traffic with protection in a ring transmission system on a single fiber. This method involves: transmitting working traffic over a first ring path from a first node to a second node in a first wavelength channel of the single fiber, transmitting working traffic over the first ring path from the second node to the first node in a second wavelength channel of the single fiber, transmitting protection traffic over a second ring path from the first node to the second node in the second wavelength channel of the single fiber and transmitting protection traffic over the second ring path from the second node to the first node in the first wavelength channel of the single fiber.

## Description

### Field of the Invention

The invention relates to communications networks and, more specifically, to a Synchronous Optical Network (SONET), a Synchronous Digital Hierarchy (SDH) or a Wavelength Division Multiplexed (WDM) ring network implemented using a single fiber.

### Background of the Invention

SONET has become a popular standard for the optical transport of telecommunications traffic. A SONET network is a collection of nodes, or network elements, connected by optical fiber. Nodes within SONET networks can be connected in numerous ways, including in both linear and ring configurations. Pertinent to the present invention is design of SONET ring transmission systems.

Traditional SONET ring transmission system architectures include the 2-fiber unidirectional path switched ring (UPSR) and the bidirectional two-fiber and four-fiber line switched rings (BLSR). The UPSR configuration is often used in implementing hub traffic patterns while the BLSR configurations are often used to implement more distributed traffic patterns such as mesh traffic patterns.

Important in both architectures is the protection of the carried telecommunications traffic in case of system failures such as a network element device malfunction or a fiber cut. A diversely routed 1+1 protection system is one in which the same traffic can be conveyed to its destination over two separate paths. Thus, in the case of a fiber cut or a device failure on one path, the traffic is still conveyed to its destination over another path. Accordingly, in the design of ring transmission systems with 1+1 protection, it is desired that working traffic and protection traffic, which in the case of a fiber cut is substantially the same as the working traffic, be diversely routed. Note that under normal operation, the protection path can be used to carry additional traffic and need not be used to duplicate the working path.

Implementation of such ring transmission systems, and specifically adding additional traffic capacity to them is often costly. The deployment of new fiber cable and optical equipment involves large capital outlays and long lead times. In addition, the use of multiple fibers in involved in providing traffic protection in traditional ring configurations increases the likelihood of inefficient utilization of network capacity.

### Summary of the Invention

Having identified the above described problems, the inventor has developed the following solution, which is embodied in the present invention.

The present invention, as described herein, provides a method of and system for carrying bidirectional traffic on a ring transmission system, such as a SONET ring or an SDH ring, on a single fiber. The invention provides for the implementation of hub and mesh traffic patterns on a single fiber in configurations such as a UPSR, a BLSR and a diversely routed 1+1 protection system.

The invention allows for network startup with a substantially lower capital outlay than is associated with traditional ring transmission system configurations. In addition, the present invention greatly improves the efficiency of ring network utilization.

Specifically, the present invention provides a method of carrying bidirectional traffic with protection in a synchronous ring transmission system on a single fiber. This method involves: transmitting working traffic over a first ring path from a first node to a second node in a first wavelength channel of the single fiber, transmitting working traffic over the first ring path from the second node to the first node in a second wavelength channel of the single fiber, transmitting protection traffic over a second ring path from the first node to the second node in the second wavelength channel of the single fiber and transmitting protection traffic over the second ring path from the second node to the first node in the first wavelength channel of the single fiber.

The invention also provides a method of carrying bidirectional traffic in a ring transmission system on a single fiber, where the system comprises a plurality of nodes configured in a mesh traffic pattern with a plurality of ring paths connecting the nodes. The method involves the steps of: transmitting traffic over one of said plurality of ring paths from a first of said plurality of nodes to a second of said plurality of nodes in a first wavelength channel of the single fiber, transmitting traffic over the one ring path from the second node to the first node in a second wavelength channel of the single fiber and repeating these two steps for each additional node connected by a ring path over which traffic is carried.

The invention also provides a bidirectional ring transmission system for carrying traffic, implemented on a single fiber. The system includes a plurality of nodes and a single fiber connecting the nodes in a ring and allowing bidirectional transmission of traffic within the nodes. The single fiber includes a plurality of wavelength channels which can be created by wavelength division multiplexing.

Other features and advantages of the present invention will become apparent to those skilled in the art from the following detailed description. It should be understood, however, that the detailed description and specific examples, while indicating preferred embodiments of the present invention, are given by way of illustration and not limitation. Many changes and modifications within the scope of the present invention may be made without departing from the spirit thereof, and the invention includes all such modifications.

### Brief Description of the Drawings

The present invention will be described below, by way of example only, with reference to the accompanying drawings, wherein:
FIGURE 1 is an illustration of the logical connections between various nodes of a ring network configured in a hub traffic pattern;
FIGURE 2 is an illustration of a physical ring network implementation of figure 1 in accordance with one embodiment of the present invention;
FIGURE 3 is an illustration of a physical ring network implementation of figure 1 in accordance with one embodiment of the invention wherein one of the nodes is a central office;
FIGURE 4 is an illustration of one embodiment of a single node within the ring network of figure 2;
FIGURE 5 is an illustration of the logical connections between various nodes of a ring network configured in a mesh traffic pattern;
FIGURE 6 is an illustration of a physical ring network implementation of figure 5 in accordance with a second embodiment of the present invention;
FIGURE 7 is a detailed illustration of one portion of the ring network of figure 6;
FIGURE 8 is a detailed illustration of a second portion of the ring network of figure 6;
FIGURE 9 is an illustration of one embodiment of a single node within the ring network of figure 6;
FIGURE 10 is an illustration of the logical connections between various nodes of a ring network configured in a mesh traffic pattern with diversely routed 1+1 connections between nodes;
FIGURE 11 is an illustration of a physical ring network implementation of figure 10 in accordance with a third embodiment of the present invention;
FIGURE 12 is a detailed illustration of one portion of the ring network of figure 11;
FIGURE 13 is a detailed illustration of a second portion of the ring network of figure 11; and
FIGURE 14 is an illustration of one embodiment of a portion of a single node within the ring network of figure 11.

### Detailed Description of the Preferred Embodiments

As described herein with reference to the accompanying drawings, the present invention provides a method of and system for carrying bidirectional traffic on a synchronous ring transmission system, such as a SONET ring or an SDH ring, on a single fiber. The invention provides for the implementation of hub and mesh traffic patterns on a ring with a single fiber connecting adjacent network elements within the ring.

The terms "nodes" and "network elements" are used interchangeably throughout this disclosure. Traffic carried on the ring transmission systems to which the present invention is directed includes digital signals, usually in SONET format. Reference to the use of a single fiber does not necessarily mean that the same fiber is used throughout the ring. It would be apparent to one skilled in the art that a fiber may terminate at a node and start anew therefrom, resulting in a ring comprising multiple fibers. In accordance with the present invention, in the various implementations of ring networks on a single fiber in the present invention, it is meant that between neighboring nodes, only a single fiber need be used.

Using the present invention, ring networks can be implemented on a single fiber in configurations such as a UPSR, a BLSR and a diversely routed 1+1 protection system. This allows for network startup with a substantially lower capital outlay than is associated with traditional ring transmission system configurations. In addition, the present invention greatly improves the efficiency of ring network utilization.

The invention involves the use of λ add-drop multiplexers (ADM) at ring nodes for inserting signals on to and extracting signals from the fiber of the ring on a specific wavelength channel and also passing signals through the ring node. The fiber used to connect the nodes of the ring can be optically separated into a plurality of wavelength channels using known methods such as wavelength division multiplexing (WDM). This allows two or more optical signals of different wavelengths to be carried on a single fiber.

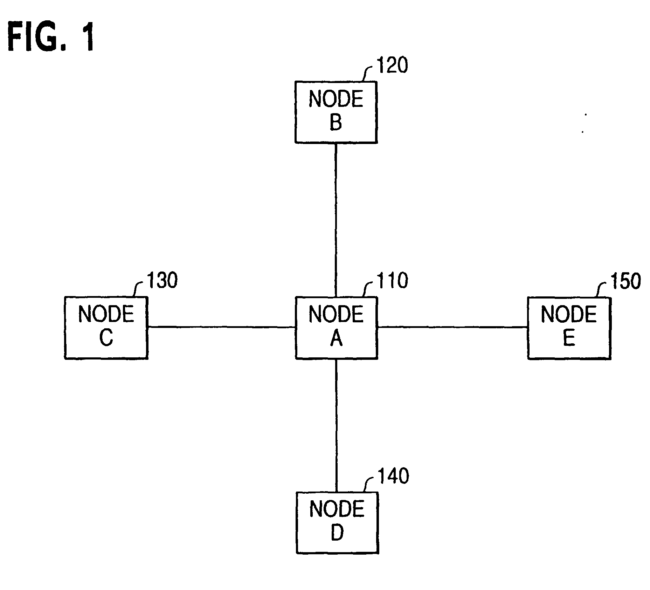

Referring now to the drawings, it should be noted that the figures 1-13 are illustrative in nature and are not drawn to scale. The figures show various configurations of a five node ring network. Those skilled in the art will understand that the number of nodes shown is for purposes of example and is not a limitation of the claimed invention; additional or fewer ring nodes can be used. In these figures, the five nodes of the ring network are labeled Node A, Node B, Node C, Node D and Node E. These nodes are interconnected to transport telecommunications traffic.

Ring networks can be configured to implement numerous types of traffic patterns. Figure 1 is an illustration of the logical connections between various nodes of a five-node ring network configured in a hub traffic pattern. Node A 110 is the hub node to which Node B 120, Node C 130, Node D 140 and Node E 150, are all connected. The connections shown between these nodes represent traffic flow. Accordingly, in a hub traffic pattern, as shown in Figure 1, all traffic flows through the hub node. This traffic pattern can be implemented in a unidirectional path switched ring (UPSR) and in a diversely routed 1+1 protection system.

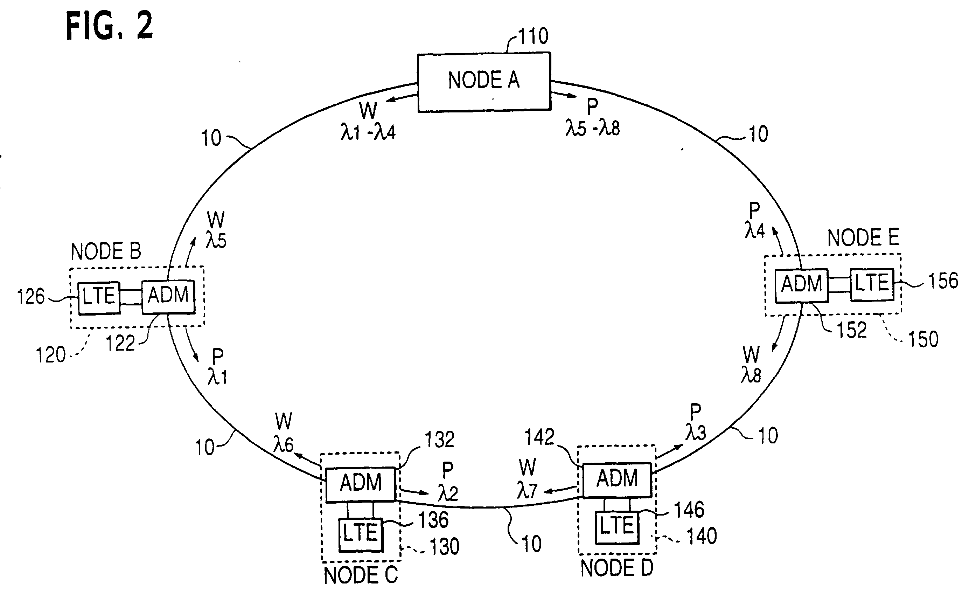

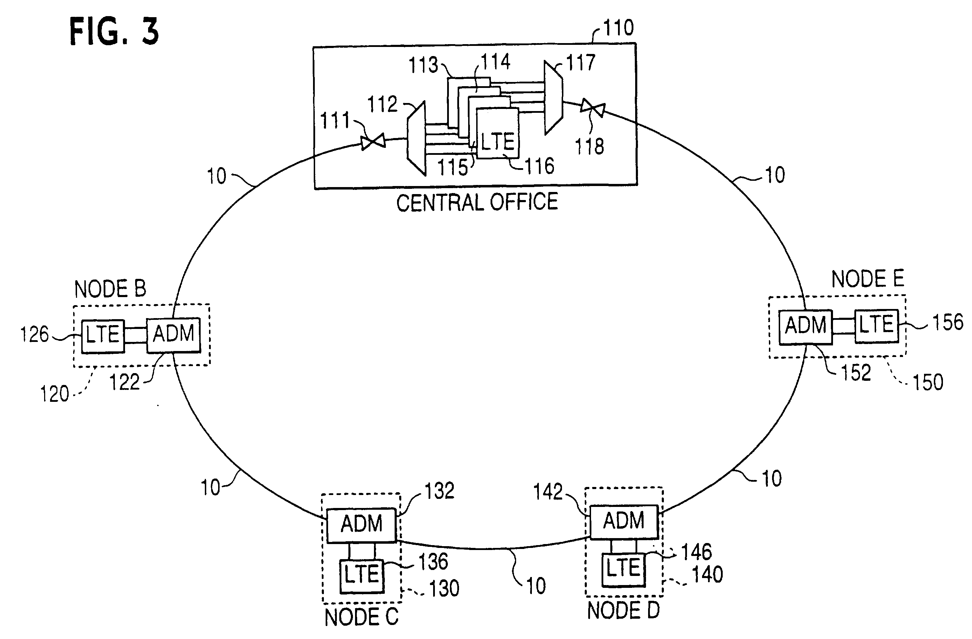

Figure 2 is an illustration of a physical ring network implementation of figure 1 in accordance with a first embodiment of the present invention. In this embodiment, a unidirectional path switched ring (UPSR) is implemented on a single fiber 10. Figure 2 also represents the implementation on a single fiber 10 of a diversely touted 1+1 protection system. As mentioned above, reference to the use of a single fiber does not necessarily mean that the same fiber is used throughout the ring, but rather that only a single fiber is necessary between neighboring nodes of the ring. In figure 2, Node A 110, Node B 120, Node C 130, Node D 140 and Node E 150, are all connected by single fiber 10 to form a ring network. The individual nodes can represent points-of-presence (POPs) while the hub Node A 110 can also represent or be connected to a central location such as a central office. Figure 3 is an illustration of a physical ring network implementation of figure 1 and equivalent to the physical ring network of figure 2, but wherein Node A 110, is a central office and Nodes B-E are POPs.

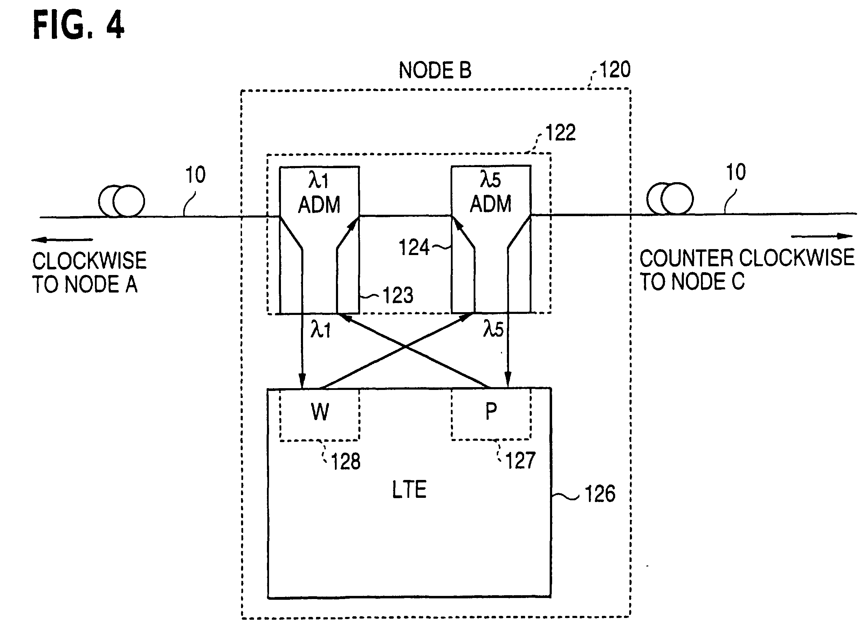

In both figures 2 and 3, ring nodes B-E comprise add-drop multiplexer (ADM) modules labeled 122, 132, 142 and 152 respectively. Each node also comprises line terminating equipment connected to the respective ADM modules and labeled 126, 136, 146 and 156 respectively. A more detailed illustration of a single ring node is shown in figure 4. This diagram, while labeled as Node B, is representative of any of Nodes B-E in figures 2 and 3. The ADM module 122 comprises two λADMs labeled 123 and 124, each capable of inserting signals on to and extracting signals from the fiber 10 on a specific wavelength channel and also passing signals through the ring node. The design and operation of λADMs is known and is described in documents such as "New Bi-Directional WDM Ring Networks with Dual Hub Nodes", Wen De Zhong, Global Telecommunications Conference, GLOBECOM '97, IEEE Volume 1, pp. 556-560, August, 1997, which is incorporated in its entirety by reference herein. It is apparent to one skilled in the art that the use of two λADMs at a ring node as shown in figure 4 is for purposes of example and not limitation; the number of λADMs used and the number of wavelength channels accessed can vary and depends upon the design of the ring network. Figure 4 further shows the line terminating equipment 126 of Node B. This equipment is connected to the ADM module 122 and comprises a working traffic portion 128 and a protection traffic portion 127.

As mentioned, Node A can be a central location such as a central office. Node A could also be simply another ring node but with a plurality of LTEs. Where individual Nodes B-E may be capable of accessing only a subset of the total number of wavelength channels used in the ring on the fiber 10, Node A as could access all of the wavelength channels on the fiber 10. Figure 3 shows Node A as a central office comprising a plurality of line terminating equipment (LTEs) 113-116 corresponding to the number of other nodes in the ring. These LTEs or connected to a working traffic multiplexer/demultiplexer 112 and a protection traffic multiplexer/demultiplexer 117. These devices are both capable of accessing a plurality of the wavelength channels in the optical fiber 10. Bidirectional optical amplifiers 111 and 118 are placed along the optical fiber 10 to compensate for signal loss associated with the length of the optical fiber 10 and the equipment at the ring nodes. In the preferred embodiment, amplifiers 111 and 118 are placed along the optical fiber 10 near or within the central office 110 to overcome losses associated with the multiplexers/demultiplexers 112 and 117.

The method of the present invention of carrying bidirectional traffic with protection in a synchronous ring transmission system, such as a SONET ring, on a single fiber will now be explained in light of the above described components of the ring network. For purposes of example, the flow of traffic between Node A 110 and Node B 120 of figures 2 and 3, over both sides of the ring, will be shown; this example is representative of the flow of traffic between the hub Node A 110, and each of the other ring Nodes B-E used in implementing the hub traffic pattern of figure 1.

Referring to figure 2, working traffic is transmitted over a first ring path, from a first node, Node A 110, to a second node, Node B 120, in a first wavelength channel, λ1, in the single fiber 10. Working traffic is transmitted over the first ring path from the second node, Node B 120, to the first node, Node A 110, in a second wavelength channel, λ5, in the single fiber 10. The first ring path, or side of the ring, used in carrying working traffic between Nodes A and B for the purposes of this example, is that which extends counter-clockwise from Node A 110 to Node B 120. This selection was arbitrary and could easily have been the path comprising the other side of the ring.

Similar to the flow of working traffic, protection traffic is transmitted over a second ring path, from the first node, Node A 110, to the second node, Node B 120, in the second wavelength channel, λ5, in the single fiber 10. Protection traffic is transmitted over the second ring path, from the second node, Node B 120, to the first node, Node A 110, in the first wavelength channel, λ1, in the single fiber 10. The second ring path, or side of the ring, used in carrying protection traffic between Nodes A and B for the purposes of this example, is that which extends clockwise from Node A 110 to Node B 120.

Referring to figure 4, signal transfers at a node and, specifically, the operation of the ADM module 122 and the LTE 126 at Node B 120, is explained. Working traffic arriving from Node A (not shown) on λ1 in the single fiber 10 is dropped (or extracted) by the λ1 ADM 123 to the working portion 128 of the LTE 126. Protection traffic from Node B 120 destined for Node A is added (or inserted) onto the single fiber 10 from the protection portion 127 of LTE 126 by the λ1 ADM 123. Similarly, protection traffic arriving from Node A on λ5 in the single fiber 10 is dropped (or extracted) by the λ5 ADM 124 to the protection portion 127 of the LTE 126. Working traffic from Node B 120 destined for Node A is added (or inserted) onto the single fiber 10 from the working portion 128 of LTE 126 by the λ5 ADM 124. Notice that the signals carried on other wavelength channels, such as λ2-λ4 and λ6-λ8 remain unchanged by the operations at Node B 120. Similarly, the operations at the other Nodes C-E do not affect the signals inserted to and extracted from the single fiber at Node B.

The flow of traffic between Node A 110 and the other ring Nodes C-E is similar to that described above with respect to Node B, but involves the use of different wavelength channels of the single fiber 10 to carry traffic. Wavelength channels λ2 and λ6 are used between Nodes A and C; wavelength channels λ3 and λ7 are used between Nodes A and D; and wavelength channels λ4 and λ8 are used between Nodes A and E. Referring again to figures 2 and 3, from Node A working traffic flows counter-clockwise over wavelength channels λ2 through λ4 of the single fiber to the respective other nodes while protection traffic flows from Node A clockwise over wavelength channels λ6 through λ8 of the single fiber to the respective other nodes. From Node C 130, working traffic flows clockwise to Node A 110 on the λ6 wavelength channel while protection traffic flows counter-clockwise to Node A on the λ2 wavelength channel. From Node D 140, working traffic flows clockwise to Node A 110 on the λ7 wavelength channel while protection traffic flows counter-clockwise to Node A on the λ3 wavelength channel. From Node E 150, working traffic flows clockwise to Node A 110 on the λ8 wavelength channel while protection traffic flows counter-clockwise to Node A on the λ4 wavelength channel.

As is apparent by the above description, in the present invention, the use of wavelength channels in a single fiber is optimized. Each wavelength channel is reused and will carry either working traffic or protection traffic depending on the location in the ring. Thus, using the present invention, a UPSR and a diversely routed 1+1 protection system can be implemented on a single fiber.

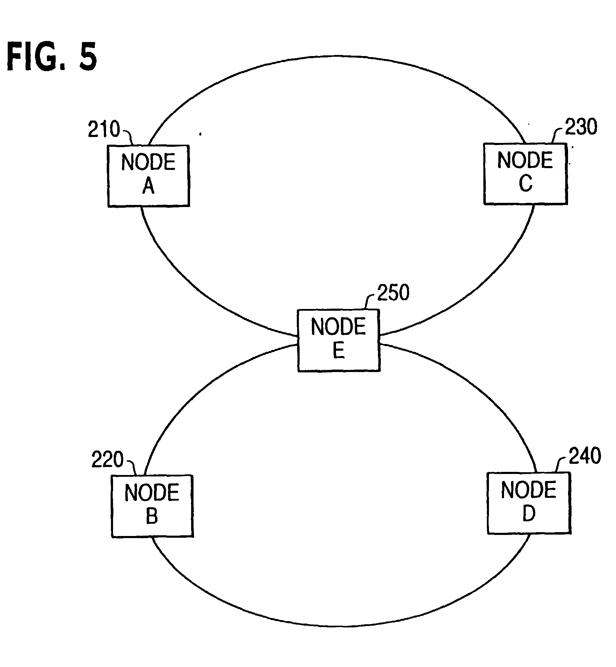

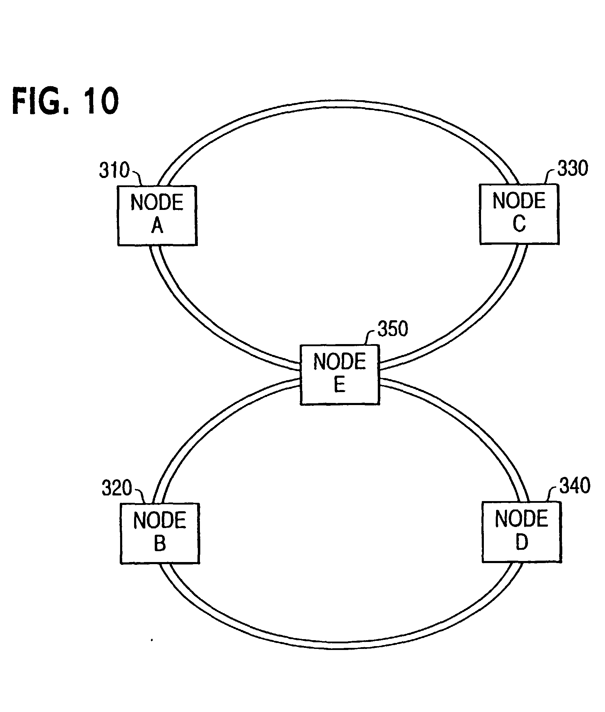

As mentioned, ring networks can be configured to implement numerous types of traffic patterns. Figure 5 is an illustration of the logical connections between various nodes of a five-node ring network configured in a mesh traffic pattern. Node A 210, Node C 230 and Node E 250 are connected in a logical ring while Node B 220, Node D 240 and Node E 250 are connected in a separate logical ring. The connections shown between these nodes represent traffic flow. This traffic pattern can be implemented in a bidirectional line switched ring (BLSR) as described herein in the second embodiment of the present invention with and in a diversely routed 1+1 protection system as described in a third embodiment of the present invention with reference to figures 10-14.

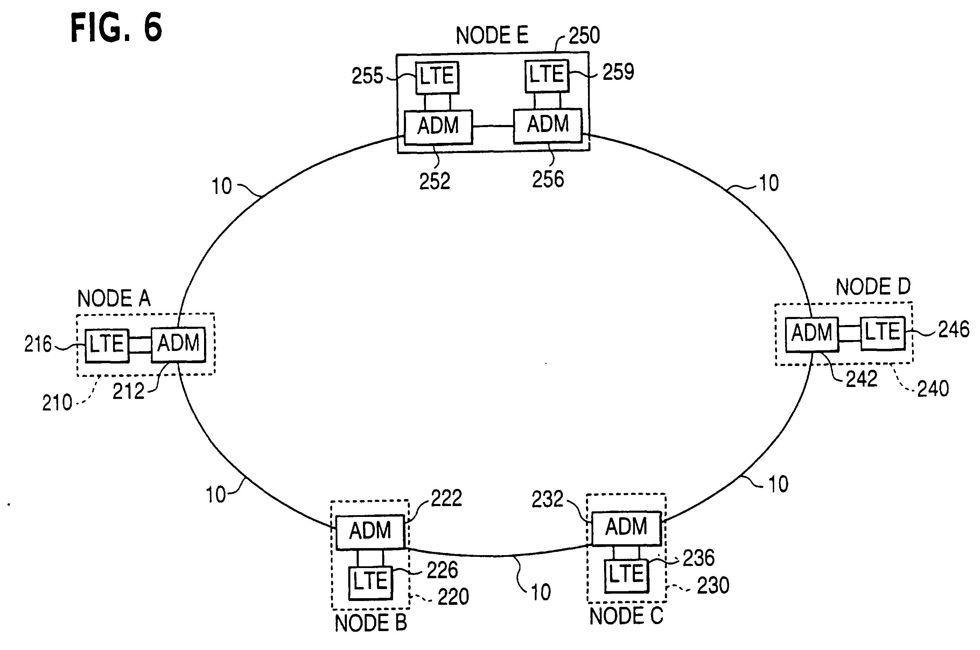

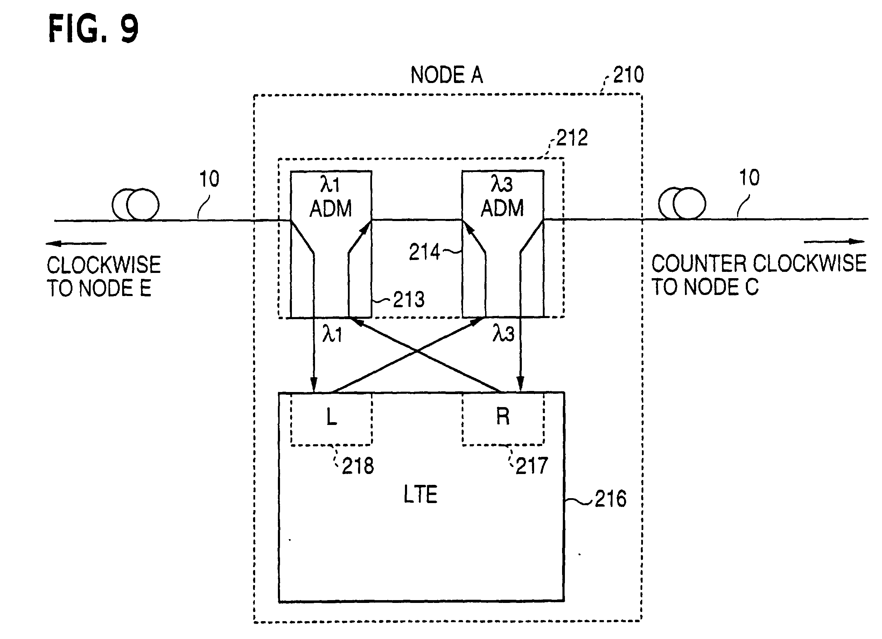

Figure 6 is an illustration of a physical ring network implementation of the mesh traffic pattern of figure 5 in accordance with the second embodiment of the present invention, a bidirectional line switched ring (BLSR) implemented on a single fiber 10. As mentioned above, reference to the use of a single fiber does not necessarily mean that the same fiber is used throughout the ring, but rather that only a single fiber is necessary between neighboring nodes of the ring. Similar to figures 2 and 3 showing networks implementing a hub traffic pattern, in figure 6, Node A 210, Node B 220, Node C 230, Node D 240 and Node E 250, are all connected by single fiber 10 to form a ring network. Ring nodes A-D comprise add-drop multiplexer (ADM) modules labeled 212, 222, 232, and 242 respectively. Node E 250, as the common node between two logical rings, comprises two such ADM modules, labeled 252 and 256, as well as two sets of line terminating equipment connected to these ADM modules, labeled 255 and 259 respectively. Each of the remaining Nodes A-D also comprises line terminating equipment connected to the respective ADM modules and labeled 216, 226, 236 and 246 respectively. A more detailed illustration of an embodiment of a single ring node is shown in figure 9. The diagram of figure 9, while labeled as Node A, is representative of any of Nodes A-D and a portion of Node E in figures 6-8. The ADM module 212 comprises two λADMs labeled 213 and 214, each capable of inserting signals on to and extracting signals from the fiber 10 on a specific wavelength channel and also passing signals through the ring node. It is apparent to one skilled in the art that the use of two λADMs at a ring node as shown in figure 9 is for purposes of example and not limitation; the number of λADMs used and the number of wavelength channels accessed can vary and depends upon the design of the ring network. Figure 9 further shows the line terminating equipment 216 of Node A 210. This equipment is connected to the ADM module 212 and comprises a left traffic portion 218 and a right traffic portion 217.

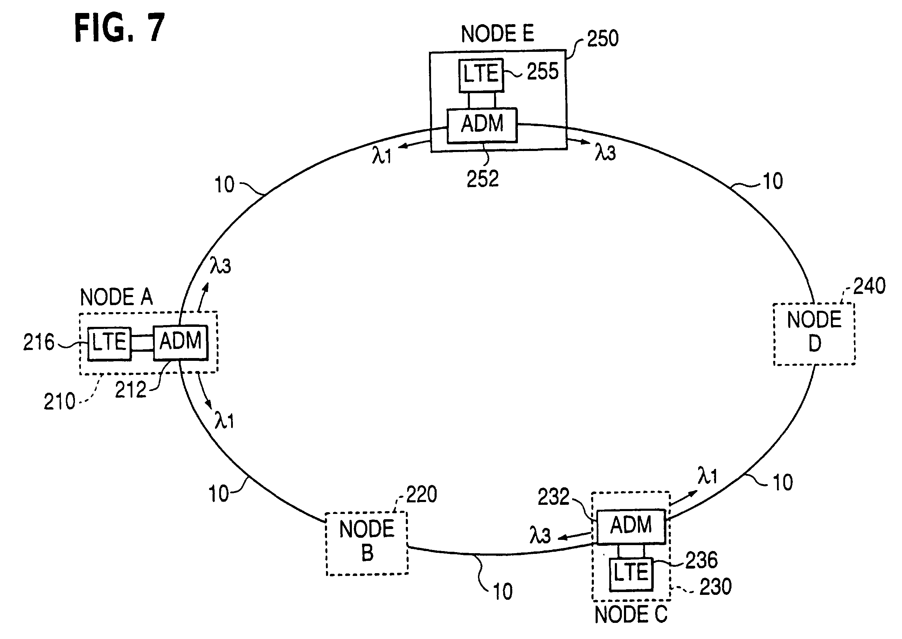

Figure 7 is a detailed illustration of one portion of the ring network of figure 6, the portion represented by the one logical ring of the mesh traffic pattern shown in figure 5 which connects Node A 210, Node C 230 and Node E 250. Traffic between these nodes bypasses, or passes unchanged, through Node B 220 and Node D 240 which are, therefore, shown as dashed outlines.

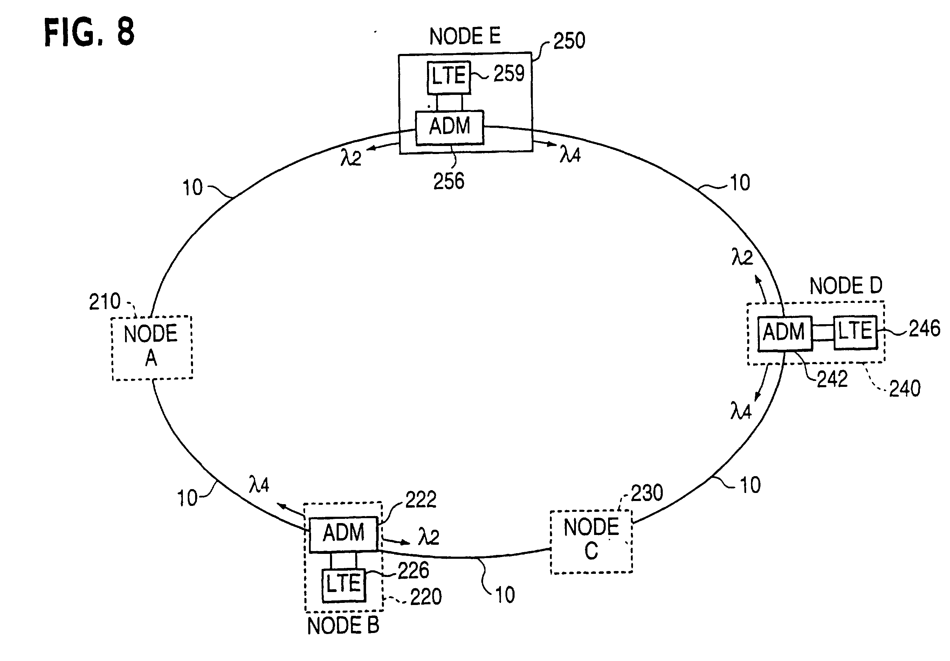

Figure 8 is a detailed illustration of another portion of the ring network of figure 6, the portion represented by the one logical ring of the mesh traffic pattern shown in figure 5 which connects Node B 220, Node D 240 and Node E 250. Traffic between these nodes bypasses, or passes unchanged, through Node A 210 and Node C 230 which are, therefore, shown as dashed outlines.

The method of the present invention of carrying bidirectional traffic in a synchronous ring transmission system, such as a SONET ring, on a single fiber will now be explained in light of the above described components of the ring network. For purposes of example, the flow of traffic between Node A 210, Node C 230 and Node E 250 of figures 6 and 7 will be shown; this example is representative of the flow of traffic between Node B 220, Node D 240 and Node E 250 of figures 6 and 8.

Referring to figure 7, traffic is transmitted over a first ring path from a first node, Node A 210, to a second node, Node C, in a first wavelength channel, λ1, in the single fiber 10. Traffic is transmitted over the first ring path, from the second node, Node C 230, to the first node, Node A 210, in a second wavelength channel, λ3, in the single fiber 10. This ring path is that which extends counter-clockwise from Node A 210 to Node C 230 as shown in figure 7. These two steps are then repeated for subsequent nodes in the logical ring over different ring paths but using the same two wavelength channels until the first node is encountered. In the present example, traffic is transmitted over a second ring path, from Node C 230 to Node E 250 in the first wavelength channel, λ1, in the single fiber 10. Traffic is transmitted over the second ring path, from Node C 230 to Node E 250, in the second wavelength channel, λ3, in the single fiber 10. This second ring path is that which extends counter-clockwise from Node C 230 to Node E 250 as shown in figure 7. Finally, traffic is transmitted over a third ring path, from Node E 250 to Node A 210 in the first wavelength channel, λ1, in the single fiber 10. Traffic is transmitted over the third ring path, from Node E 250 to Node A 210, in the second wavelength channel, λ3, in the single fiber 10. This third ring path is that which extends counter-clockwise from Node E 250 to Node A 210 as shown in figure 7.

Referring to figure 9, signal transfers at a node and, specifically, the operation of the ADM module 212 and the LTE 216 at Node A 210, is explained. The operation is similar to that described with respect to figure 4. Traffic arriving from Node E (not shown) on λ1 in the single fiber 10 is dropped (or extracted) by the λ1 ADM 213 to the left portion 218 of the LTE 216. Traffic from Node A 210 destined for Node E is added (or inserted) onto the single fiber 10 from the right portion 217 of the LTE 216 by the λ1 ADM 213. Similarly, traffic arriving from Node C (not shown) on the λ3 wavelength channel in the single fiber 10 is dropped (or extracted) by the λ3 ADM 214 to the right portion 217 of the LTE 216. Traffic from Node A 210 destined for Node C is added (or inserted) onto the single fiber 10 from the left portion 218 of the LTE 216 by the λ3 ADM 214. Notice that the signals carried on other wavelength channels, such as λ2 and λ4 remain unchanged by the operations at Node A 210. The node described above with reference to figure 9 is typical of any node in the ring networks of figures 6-8. Node E, as the node common to both logical rings, would contain two such sets of equipment.

The above described flow of traffic between Node A, Node C and Node E is also representative of the flow of traffic between Node B 220, Node D 240 and Node E 250 of figures 6 and 8. The main difference is that the first and second wavelength channels of the single fiber 10 used are labeled λ2 and λ4 respectively.

As can be seen, the logical ring of the mesh traffic pattern can be implemented using only two wavelength channels. Any number of nodes can be placed on this logical ring, and still it would need only two wavelength channels. As is apparent by the above description, in the present invention, the use of wavelength channels in a single fiber is optimized. Each wavelength channel is reused and will carry different traffic depending on the location in the ring. Thus, using the present invention, a BLSR can be implemented on a single fiber.

Figure 10 is an illustration of the logical connections between various nodes of a five-node ring network configured in a mesh traffic pattern, similar to that shown in figure 5. Node A 310, Node C 330 and Node E 350 are connected in a logical ring while Node B 320, Node D 340 and Node E 350 are connected in a separate logical ring. The connections shown between these nodes represent traffic flow. This traffic pattern can be implemented in a diversely routed 1+1 protection system as described herein in a third embodiment of the present invention.

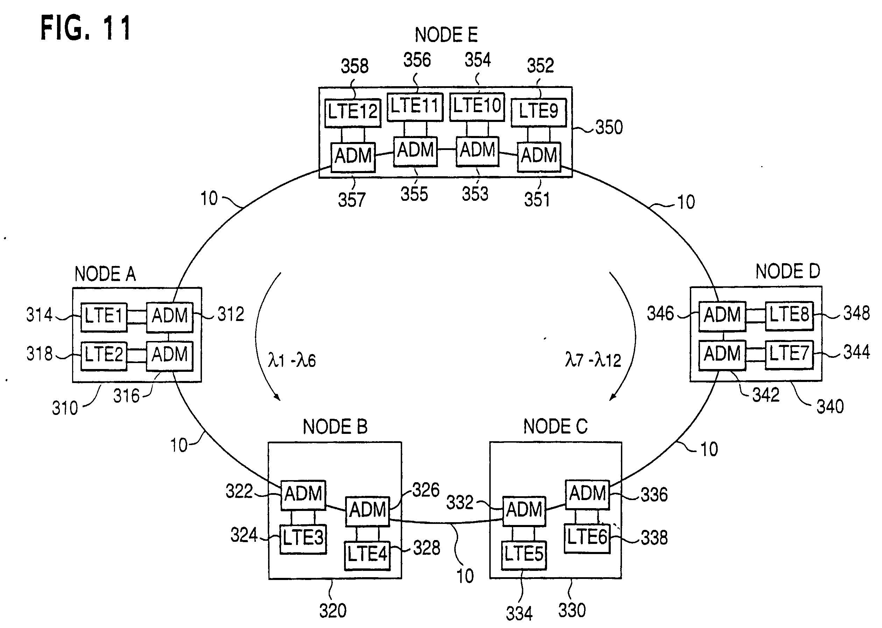

Figure 11 is an illustration of a physical ring network implementation of the mesh traffic pattern of figure 10 in accordance with a third embodiment of the present invention, a diversely routed 1+1 protection system implemented on a single fiber 10. As mentioned above, reference to the use of a single fiber does not necessarily mean that the same fiber is used throughout the ring, but rather that only a single fiber is necessary between neighboring nodes of the ring.

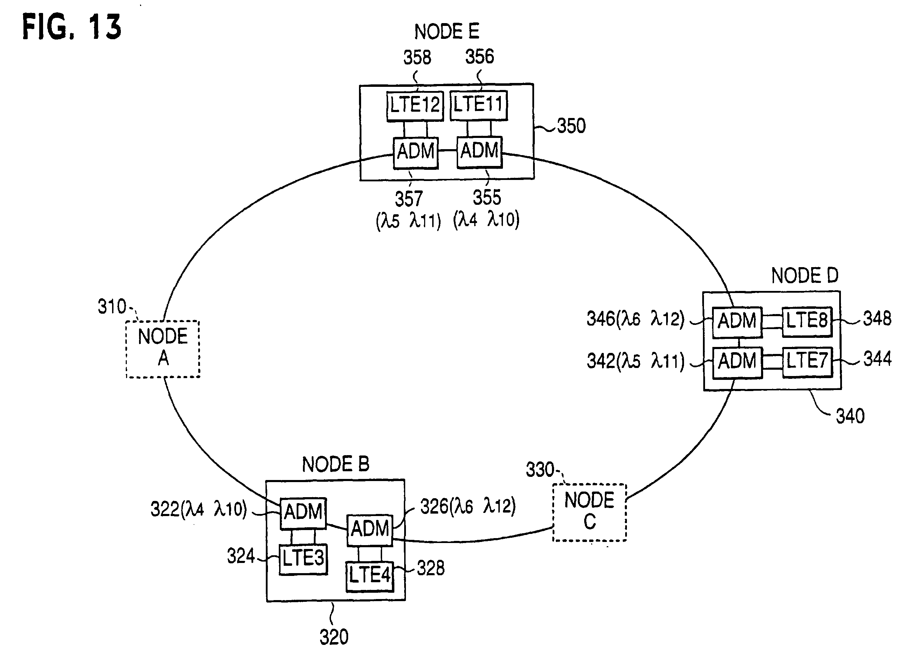

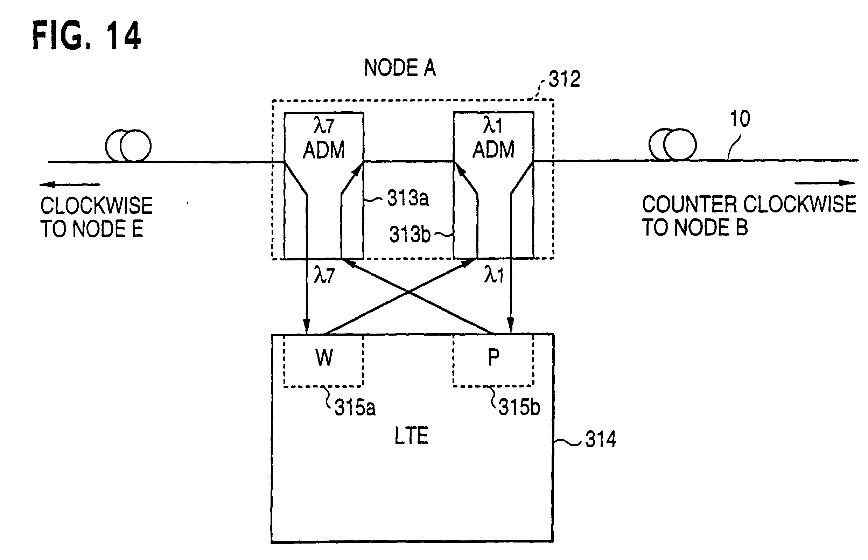

Similar to figure 6 showing a network implementing a mesh traffic pattern, in figure 11, Node A 310, Node B 320, Node C 330, Node D 340 and Node E 350, are all connected by single fiber 10 to form a ring network. Ring nodes A-D each comprise a pair of add-drop multiplexer (ADM) modules labeled 312, 316, 322, 326, 332, 336, 342 and 346 respectively. These nodes also comprise line terminating equipment connected to the respective ADM modules and labeled LTE1 314, LTE2 318, LTE3 324, LTE4 328, LTE5 334, LTE6 338, LTE7 344 and LTE8 348 respectively. Node E 350, as the common node between two logical rings, comprises two pairs of such ADM modules, labeled 351, 353, 355 and 357, as well as corresponding sets of line terminating equipment connected to these ADM modules, labeled LTE9 352, LTE10 354, LTE11 356 and LTE12 358 respectively. A more detailed illustration of an embodiment of an ADM module and LTE pair for a single ring node is shown in figure 13. The diagram of figure 13, while labeled as corresponding to Node A, is representative of an ADM module and LTE pair of any of Nodes A-E in figures 10-12. The ADM module 312 comprises two λADMs labeled 313a and 313b, each capable of inserting signals on to and extracting signals from the fiber 10 on a specific wavelength channel and also passing signals through the ring node. It is apparent to one skilled in the art that the use of two λADMs as shown in figure 14 is for purposes of example and not limitation; the number of λADMs used and the number of wavelength channels accessed can vary and depends upon the design of the ring network. Figure 14 further shows the line terminating equipment LTE1 314 of Node A 310. This equipment is connected to the ADM module 312 and comprises a working traffic portion 315a and a protection traffic portion 315b.

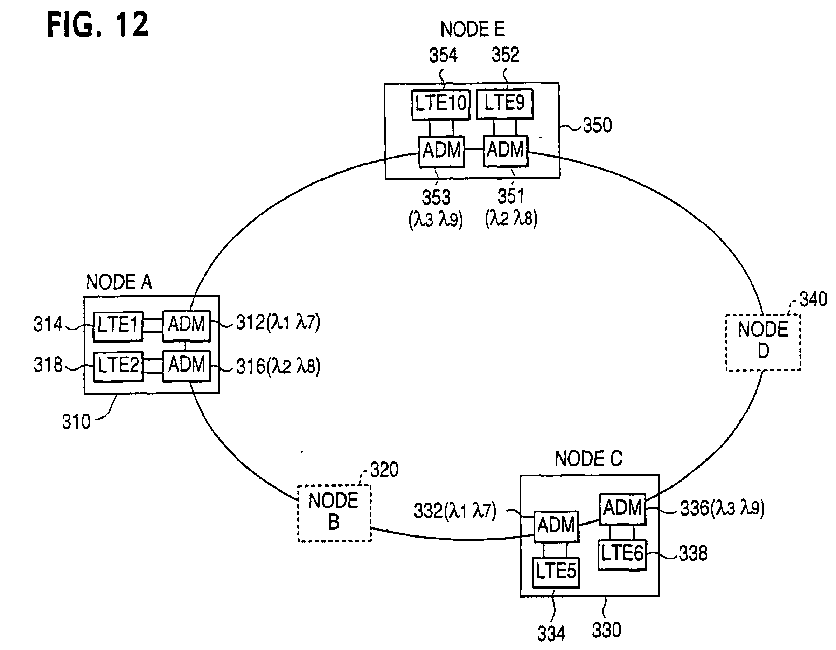

Figure 12 is a detailed illustration of one portion of the ring network of figure 11, the portion represented by the one logical ring of the mesh traffic pattern shown in figure 10 which connects Node A 310, Node C 330 and Node E 350. Traffic between these nodes bypasses, or passes unchanged, through Node B 320 and Node D 340 which are, therefore, shown as dashed outlines.

Figure 13 is a detailed illustration of another portion of the ring network of figure 11, the portion represented by the one logical ring of the mesh traffic pattern shown in figure 10 which connects Node B 320, Node D 340 and Node E 350. Traffic between these nodes bypasses, or passes unchanged, through Node A 310 and Node C 330 which are, therefore, shown as dashed outlines.

The method of the present invention of carrying bidirectional traffic with protection in a synchronous ring transmission system, such as a SONET ring, on a single fiber will now be explained in light of the above described components of the ring network. For purposes of example, the flow of traffic between Node A 310, Node C 330 and Node E 350 of figures 11 and 12 will be shown; this example is representative of the flow of traffic between Node B 320, Node D 340 and Node E 350 of figures 11 and 13. In this example of the present invention, traffic on wavelength channels λ1 through λ6 of the single fiber 10 flows in one direction around the ring (counter-clockwise is shown) while traffic on wavelength channels λ7 through λ12 flows in the opposite direction around the ring (clockwise is shown), as shown in figure 11.

Referring to figure 12, the flow of traffic between Node A 310 and Node C 330 occurs between the LTE1/ADM module pair 314/312 of Node A 310 and the LTE5/ADM module pair 334/332 of Node C 330 and uses wavelength channels λ1 and λ7. Working traffic is transmitted over a first ring path, from a first node, Node A 310, to a second node, Node C 330, in a first wavelength channel, λ1, in the single fiber 10. Working traffic is transmitted over the first ring path from the second node, Node C 330, to the first node, Node A 310, in a second wavelength channel, λ7, in the single fiber 10. The first ring path, or side of the ring, used in carrying working traffic between Nodes A and C for the purposes of this example, is that which extends counter-clockwise from Node A 310 to Node C 330. This selection was arbitrary and could easily have been the path comprising the other side of the ring.

Similar to the flow of working traffic, protection traffic is transmitted over a second ring path, from the first node, Node A 310, to the second node, Node C 330, in the second wavelength channel, λ7, in the single fiber 10. Protection traffic is transmitted overthe second ring path, from the second node, Node C 330, to the first node, Node A 310, in the first wavelength channel, λ1, in the single fiber 10. The second ring path, or side of the ring, used in carrying protection traffic between Nodes A and C for the purposes of this example, is that which extends clockwise from Node A 310 to Node C 330.

The flow of traffic between Node C and Node E occurs in a similar manner to that described with respect to Node A and Node C, but uses the LTE6/ADM module pair 338/336 of Node C 330 and the LTE10/ADM module pair 354/353 of Node E 350 and uses the wavelength channels λ3 and λ9. Similarly, the flow of traffic between Node E 350 and Node A 310 occurs between the LTE2/ADM module pair 318/316 of Node A 310 and the LTE9/ADM module pair 352/351 of Node E 350 and uses the wavelength channels λ2 and λ8. As mentioned above, traffic on wavelength channels λ1 through λ6 flows in one direction around the ring, shown as clockwise in figure 11, while traffic on wavelength channels λ7 through λ12 flows in the opposite direction around the ring.

Referring to figure 14, signal transfers at a node and, specifically, the operation of the LTE1/ADM module pair 314/312 at Node A 310, is explained. The operation is similar to that described with respect to figures 4 and 9. Working traffic arriving from Node C (not shown) on λ7 in the single fiber 10 is dropped (or extracted) by the λ7 ADM 313a to the working traffic portion 315a of the LTE1 314. Working traffic from Node A 310 destined for Node C is added (or inserted) onto the single fiber 10 from the working traffic portion 315a of the LTE1 314 by the λ1 ADM 313b. Similarly, protection traffic arriving from Node C (not shown) on the λ1 wavelength channel in the single fiber 10 is dropped (or extracted) by the λ1 ADM 313b to the protection traffic portion 315b of the LTE1 314. Protection traffic from Node A 310 destined for Node C is added (or inserted) onto the single fiber 10 from the protection traffic portion 315b of the LTE1 314 by the λ7 ADM 313a. Notice that the signals carried on other wavelength channels, remain unchanged by the operations of the LTE1/ADM module pair 314/312 at Node A 310. The LTE/ADM module pair of a node as described above with reference to figure 14 is typical of one of such pairs in any node in the ring networks of figures 11-13.

The above described flow of traffic between Node A, Node C and Node E is also representative of the flow of traffic between Node B 320, Node D 340 and Node E 350 of figures 11 and 13. The differences are as follows. The flow of traffic between Node B and Node D occurs between the LTE4/ADM module pair 328/326 of Node B 320 and the LTE8/ADM module pair 348/346 of Node D 340 and uses the wavelength channels λ6 and λ12. The flow of traffic between Node D and Node E occurs between the LTE7/ADM module pair 344/342 of Node D 340 and the LTE12/ADM module pair 358/357 of Node E 350 and uses the wavelength channels λ5 and λ11. The flow of traffic between Node B and Node E occurs between the LTE3/ADM module pair 324/322 of Node B 320 and the LTE11/ADM module pair 356/355 of Node E 350 and uses the wavelength channels λ4 and λ10. As mentioned above, traffic on wavelength channels λ1 through λ6 flows in one direction around the ring, shown as clockwise in figure 11, while traffic on wavelength channels λ7 through λ12 flows in the opposite direction around the ring, shown as counter-clockwise. It would be apparent to those skilled in the art that alternative configurations and wavelength channels and directions of traffic flow could be used in the present invention.

As is apparent by the above description, in the present invention, the use of wavelength channels in a single fiber is optimized. Each wavelength channel is reused and will carry different traffic depending on the location in the ring. Thus, using the present invention, a diversely routed 1+1 mesh protection system can be implemented on a single fiber.

In summary, the present invention provides a method of and system for carrying bidirectional traffic on a ring transmission system, such as a SONET, SDH or WDM ring, on a single fiber. Using the present invention, hub and mesh traffic patterns can be implemented on a single fiber ring network in configurations such as a UPSR, a BLSR and a diversely routed 1+1 protection system. This allows for network startup with a substantially lower capital outlay than is associated with traditional ring transmission system configurations. In addition, the present invention greatly improves the efficiency of ring network utilization. Specifically, the present invention provides a method of carrying bidirectional traffic with protection in a ring transmission system on a single fiber. This method involves: transmitting working traffic over a first ring path from a first node to a second node in a first wavelength channel of the single fiber, transmitting working traffic over the first ring path from the second node to the first node in a second wavelength channel of the single fiber, transmitting protection traffic over a second ring path from the first node to the second node in the second wavelength channel of the single fiber and transmitting protection traffic over the second ring path from the second node to the first node in the first wavelength channel of the single fiber.

It is intended that the invention, as described herein, include all variations and modifications as fall within the scope of the claims and equivalents thereof.

## Claims

1. A method of carrying bidirectional traffic with protection in a ring transmission system on a single fiber, the method comprising the steps of:
transmitting working traffic over a first ring path from a first node to a second node in a first wavelength channel of the single fiber;
transmitting working traffic over the first ring path from the second node to the first node in a second wavelength channel of the single fiber;
transmitting protection traffic over a second ring path from the first node to the second node in the second wavelength channel of the single fiber; and
transmitting protection traffic over the second ring path from the second node to the first node in the first wavelength channel of the single fiber.

2. A method according to claim 1 wherein the first ring path denotes one of a portion of the single fiber ring extending clockwise from the first node to the second node and a portion of the single fiber ring extending counter-clockwise from the first node to the second node, and
wherein the second ring path is distinct from the first ring path.

3. A method according to claim 1 or claim 2, wherein the working traffic transmitted from the first node is received at a working section of a line terminating device at the second node and wherein the protection traffic transmitted from the first node is received at a protection section of the line terminating device at the second node.

4. A method according to any one of claims 1 to 3, wherein the nodes are connected in a hub configuration or a mesh configuration.

5. A method of carrying bidirectional traffic in a ring transmission system on a single fiber, wherein said system comprises a plurality of nodes configured in a mesh traffic pattern with a plurality of ring paths connecting said plurality of nodes, the method comprising the steps of:
a) transmitting traffic over one of said plurality of ring paths from a first of said plurality of nodes to a second of said plurality of nodes in a first wavelength channel of the single fiber;
b) transmitting traffic over the one ring path from the second node to the first node in a second wavelength channel of the single fiber; and
c) repeating steps a) and b) of this method for each additional node connected by a ring path over which traffic is carried.

6. A method according to any preceding claim, wherein the traffic comprises digital signals of synchronous optical network (SONET) format or synchronous digital hierarchy (SDH) format.

7. A method according to any preceding claim, wherein the transmission system is configured to form a bidirectional line switched ring (BLSR), a unidirectional path switched ring (UPSR) or a 1+1 protected diversely routed ring.

8. A method according to any preceding claim, wherein the wavelength channels of the single fiber are defined by wavelength division multiplexing.

9. A bidirectional ring transmission system for carrying traffic, implemented on a single fiber, the system comprising:
a plurality of nodes; and
a single fiber connecting said plurality of nodes and allowing bidirectional transmission of traffic within said plurality of nodes, said fiber comprising a plurality of wavelength channels,
wherein said plurality of nodes is connected in a ring.

10. A transmission system according to claim 9, wherein at least a first node and a second node of said plurality of nodes each further comprise:
at least one λ add-drop multiplexer connected to the single fiber for extracting signals from and inserting signals onto a wavelength channel of the single fiber; and
a line terminating device connected to the at least one λ add-drop multiplexer.

11. A transmission system according to claim 9 or claim 10, further facilitating traffic protection wherein the traffic carried by the system further comprises both working traffic and protection traffic.

12. A transmission system according to any one of claims 9 to 11, wherein the single fiber further comprises:
a first ring path denoting one of a portion of the single fiber extending clockwise from the first node to the second node and a portion of the single fiber extending counter-clockwise from the first node to the second node; and
a second ring path distinct from the first ring path,
wherein working traffic is transmitted over the first ring path from the first node to the second node in a first wavelength channel of the single fiber, working traffic is transmitted over the first ring path from the second node to the first node in a second wavelength channel of the single fiber, protection traffic is transmitted over a second ring path from the first node to the second node in the second wavelength channel of the single fiber and protection traffic is transmitted over the second ring path from the second node to the first node in the first wavelength channel of the single fiber.

13. A transmission system according to any one of claims 10 to 12, wherein the tine terminating device of the second node further comprises:
a working portion for transceiving working traffic to and from the first node; and
a protection portion for transceiving protection traffic to and from the first node.

14. A transmission system according to any one of claims 10 to 13, wherein the first node is a central office (CO) and the second node is a point-of-presence (POP).

15. A transmission system according to any one of claims 9 to 14, wherein the single fiber connecting said plurality of nodes further comprises a plurality of ring paths,
wherein traffic is transmitted over one of said plurality of ring paths from the first node to the second node in a first wavelength channel of the single fiber and
wherein traffic is transmitted over the one ring path from the second node to the first node in a second wavelength channel of the single fiber.

16. A transmission system according any one of claims 9 to 15, wherein said wavelength channels are defined by wavelength division multiplexing.

17. A transmission system according to any one of claims 9 to 16, wherein said plurality of nodes are configured in a hub or a mesh traffic pattern.

18. A transmission system according to any one of claims 9 to 17, configured to form a bidirectional line switched ring (BLSR), a unidirectional path switched ring (UPSR) or a 1+1 protected diversely routed ring.

19. A transmission system according to any one of claims 9 to 18, wherein the traffic comprises digital signals of synchronous optical network (SONET) format or synchronous digital hierarchy (SDH) format.

20. A method of managing a ring transmission system to provide bidirectional traffic on a single fibre in accordance with the method of any one of claims 1 to 8.

21. A method of providing protection in a ring transission system carrying bidirectional traffic on a single fibre in accordance with any one of claims 1 to 8.

22. A node for a ring transmission system in accordance with any one of claims 9 to 19.
